# EUROPÄISCHE PATENTSCHRIFT

(11) **EP 1 720 727 B1**
(45) Veröffentlichungstag und Bekanntmachung des Hinweises auf die Patenterteilung: **24.06.2009**
(21) Anmeldenummer: 05728247.7
(22) Anmeldetag: 03.03.2005
(51) Int. Cl.: B60K 26/02

(54) **VORRICHTUNG ZUR STEUERUNG DER GESCHWINDIGKEIT EINES FAHRZEUGS**
DEVICE FOR CONTROLLING THE SPEED OF A VEHICLE
DISPOSITIF POUR REGULER LA VITESSE D'UN VEHICULE

(30) Priorität: 04.03.2004 DE 102004011206
(43) Veröffentlichungstag der Anmeldung: 15.11.2006
(73) Patentinhaber: Conti Temic microelectronic GmbH, 90411 Nürnberg (DE)
(72) Erfinder: GEBHART, Bernd, 90556 Sendendorf (DE); PIRNER, Hermann, 82278 Illschwang (DE); WEBER, Robert, 91301 Forchheim (DE); OED, Harald, 90482 Nürnberg (DE); LAUFER, Herbert, 91322 Gräfenberg (DE); HABEL, Peter, 90408 Nürnberg (DE); WIESER, Hermann, 91189 Rohr (DE); NAGEL, Michael, 90455 Nürnberg (DE); GRAMANN, Matthias, 91233 Neunkirchen a.S. (DE)
(86) Internationale Anmeldenummer: PCT/DE2005/000374
(87) Internationale Veröffentlichungsnummer: WO 2005/084991

(56) Entgegenhaltungen:
- DE-A- 3 400 560
- DE-A1- 10 208 504
- DE-A1- 19 506 629

## Beschreibung

Die Erfindung betrifft eine Vorrichtung zur Steuerung der Geschwindigkeit eines Fahrzeugs nach dem Oberbegriff des Anspruchs 1.

In der Automobilindustrie geht der Trend immer mehr dazu über, den Fahrzeuglenker hinsichtlich Fahrsicherheit und Fahrkomfort zu unterstützen. Beispiele dafür sind Spurhaltesysteme oder Systeme mit Tempomatfunktion. Dabei wird das Fahrverhalten auf Grund gemessener Fahrzeug- und Umgebungsparameter unterstützend beeinflusst. Die Kräfte, die hierzu aufgebracht werden müssen, werden zum Großteil von elektromechanischen Systemen, wie Elektromotoren, aufgebracht.

Beispielweise fungieren sogenannte Force-Feedback-Systeme bei der Geschwindigkeitsbeeinflussung gleichzeitig als Geschwindigkeitsregler, Geschwindigkeitsbegrenzer und bei der Überschreitung eines vorgegebenen Geschwindigkeitswertes als Warneinrichtung. Dabei wirkt der Kraft, die vom Fahrerfuß zum Zweck der Geschwindigkeitserhöhung auf das Gaspedal ausgeübt wird, eine Rückstellkraft entgegen. Die Höhe der Rückstellkraft hängt insbesondere ab von der Höhe der Abweichung vom Geschwindigkeitssollwert.

Eine derartige Vorrichtung ist aus der EP 0 617 674 B1 bekannt. Die Vorrichtung für die Steuerung der Leistung von Motoren, insbesondere von Kraftfahrzeugmotoren umfasst einen Servomotor zur Kraftregelung, um auf das durch den Fahrer direkt betätigte Organ zur Leistungsregelung, beispielsweise ein Gaspedal, über eine mechanische Verbindung eine gesteuerte Rückholkraft auszuüben. Diese durch eine mechanische Verbindung übertragene Kraft wird von einer Feder erzeugt, die einem Dreieckspunktmechanismus zugeordnet ist, bei dem ein Motor die Kraftkomponenten verlagert, die auf das Ausgangsorgan des Servomotors einwirken.

Eine derartige Vorrichtung zur Steuerung der Geschwindigkeit eines Fahrzeugs besteht aus einer Vielzahl eigenständiger Bauteile, die mit großem Aufwand montiert werden müssen. Die auf das Pedal wirkende Rückholkraft wird unter Aufwendung eines komplizierten Umlenkrnechanismusses erzeugt. Dadurch gestaltet sich sowohl die Herstellung als auch die Kalibrierung der Vorrichtung sehr aufwändig.

Aus der DE 199 16 434 A1 ist ein schwenkbares Pedal zum Auslösen und Übertragen von Steuerbewegungen an Komponenten eines Kraftfahrzeugs bekannt, das über einen geregelten bzw. gesteuerten Elektromotor mit daran angekoppeltem mechanischen Getriebe angetrieben wird.

Nachteilig bei dieser Vorrichtung ist, dass die ursprünglich rotatorische Kraft ausgehend vom Elektromotor über komplizierte Umlenkmechanismen in eine translatorisch wirkende Kraft umgewandelt werden muss. Zusätzlich ist zwischen Elektromotor und Pedal ein mechanisches Getriebe notwendig. Der Material- und der Montageaufwand dieser Vorrichtung ist hoch.

Eine elegantere Vorrichtung ist aus der DE 102 50 456 A1 bekannt. Darin wird eine Vorrichtung zur Steuerung eines Fahrzeugparameters, insbesondere der Fahrzeuggeschwindigkeit, beschrieben. Das vorzugsweise als Pedal ausgestaltete Steuerorgan führt durch eine entsprechende Betätigungskraft entgegen einer Rückstellkraft eine Lageänderung herbei, die zu einer Erhöhung des Fahrzeugparameters, insbesondere der Antriebskraft des Motors führt. Dabei ist ein elektromechanischer Aktuator vorgesehen, der eine in Rückstellrichtung des Steuerorgans wirkende zusätzliche Rückstellkraft aufbringt. In dem Aktuator ist ein Elektromotor als elektromechanischer Antrieb vorgesehen, insbesondere ein Linearmotor. Dadurch entfällt der bisher benötigte Umlenkmechanismus, da die Kraft von vornherein linear wirkt.

Nachteilig an dieser Vorrichtung ist die aufwändige Konstruktion und die komplizierte Ansteuerung des Linearmotors. Da bei dieser Motorart zwangsläufig störende Wirbelströme auftreten, muss der Motor geblecht ausgeführt werden, was sich in den Herstellungskosten negativ bemerkbar macht. Darüber hinaus besteht der Motor aus mehreren Spulen, die entsprechend aufwendig verschaltet und angesteuert werden müssen.

Eine Vorrichtung zur Steuerung der Geschwindigkeit mit den Merkmalen des oberbegriffs des Anspruchs 1 ist bekannt aus DE-A-3 400 560.

Es ist daher die Aufgabe der vorliegenden Erfindung, eine einfache, wenige Bauteile umfassende und kompakte Vorrichtung zur Steuerung der Geschwindigkeit eines Fahrzeugs derart zu schaffen, dass sowohl Material- und Herstellungskosten, als auch der benötigte Bauraum gering sind.

Diese Aufgabe wird erfindungsgemäß gelöst durch die Merkmale des Anspruchs 1. Vorteilhafte Weiterbildungen sind Gegenstand der auf den Anspruch 1 unmittelbar oder mittelbar rückbezogenen Ansprüche.

Die erfindungsgemäße Vorrichtung zur Steuerung der Geschwindigkeit eines Fahrzeugs umfasst im wesentlichen aus ein Pedalelement und eine elektrodynamische Rückstellvorrichtung. Als Rückstellvorrichtung ist erfindungsgemäß ein Tauchspulensteller vorgesehen. Der Tauchspulensteller weist ein bewegliches Stellglied auf. Ein in dem beweglichen Stellglied integrierter Betätigungsstößel bewirkt dann die Rückstellkraft auf das Pedalelement.

Der Tauchspulensteller ist eine elektrodynamische Stellvorrichtung. Im Gegensatz zum elektromagnetischen Stellprinzip beruht das elektrodynamische Stellprinzip auf der Kraft auf strom-durchflossene Leiter im Magnetfeld. Der Tauchspulensteller umfasst eine Magnetanordnung, die die erregende Feldenergie liefert, und eine Spulenanordnung, die die zu wandelnde Energie liefert.

Die Magnetanordnung umfasst im wesentlichen ein Magnetjoch und einen Magneten. Der Magnet kann ein Permanentmagnet oder ein Elektromagnet sein. Die Spulenanordnung umfasst im wesentlichen einen Spulenträger und eine Spule, auch Tauchspule genannt.

Ein Vorteil dieses elektrodynamischen Prinzips ist, dass die Kraft über den gesamten Stellweg nahezu konstant ist. Des weiteren sind mithilfe dieses Prinzips sehr kleine, hoch aufgelöste Auslenkungen in kürzester Zeit möglich. Durch Stromumkehr in der Erregerspule oder in der Tauchspule sind zwei aktive Wirkrichtungen möglich.

Das bewegliche Stellglied kann entweder die Magnetanordnung oder die Spulenanordnung sein. Vorteilhafterweise ist die Magnetanordnung als das bewegliche und die Spulenanordnung als das nicht bewegliche Teil ausgebildet. Dadurch wird erreicht, dass die Stromzuführung zur Spule als nicht beweglich ausgeführt werden kann und die gesamte Anordnung somit vereinfacht und kostengünstiger wird. Zudem kann die in der Spule entstehende Wärme über den Spulenträger zum Beispiel an ein umgebendes Gehäuse abgeführt werden. Der Magnet der in diesem Fall beweglichen Magnetanordnung ist der Einfachheit halber ein Permanentmagnet, da ein Elektromagnet eine beweglich auszuführende Stromzuführung benötigen würde.

Ist die Magnetanordnung beweglich ausgeführt, so ist der Betätigungsstößel am Magnetjoch, vorzugsweise axial, integriert. In dem Fall, dass die Spulenanordnung die Stellfunktion ausübt, ist der Betätigungsstößel am Spulenträger, ebenfalls bevorzugt axial, integriert.

Die Bewegung des Stellgliedes verläuft geradlinig. Sollte es jedoch erforderlich sein, kann die Bewegung des Stellgliedes ohne weiteres auch auf einer leicht gekrümmten Bahn, zum Beispiel einem Kreissegment, erfolgen.

Das Pedalelement zur Veränderung der Fahrzeuggeschwindigkeit wird vom Fahrerfuß in eine Richtung zur Geschwindigkeitserhöhung betätigt. Die Betätigung des Pedal elements in die entgegengesetzte Richtung geschieht in der Regel durch eine mechanische Rückholfeder und bewirkt eine Geschwindigkeitsverringerung.

Die Wechselwirkung zwischen dem Betätigungsstößel der Rückstellvorrichtung und dem Pedalelement ist dergestalt, dass der Betätigungsstößel auf das Pedalelement nur in eine Richtung eine Kraft, eben die Rückstellkraft, und zwar in Richtung Geschwindigkeitsverringerung ausübt. Ist zum Beispiel bei der Verwendung einer Geschwindigkeitsbegrenzungsfunktion der Geschwindigkeitsgrenzwert erreicht oder gar überschritten, so wird dies dem Fahrer über eine am Pedalelement durch die Rückstellvorrichtung verursachte Rückstellkraft mitgeteilt. Die Folge ist eine Unterbrechung der Geschwindigkeitserhöhung beziehungsweise, bei einer Grenzwertüberschreitung eine Geschwindigkeitsverringerung. Zwischen dem Betätigungsstößel und dem Pedalelement besteht keine feste mechanische oder andersartig gestaltete Verbindung. Dadurch ist sichergestellt, dass die Rückstellvorrichtung keine Kraft in Richtung einer Geschwindigkeitserhöhung ausüben kann.

In bestimmten Fahrsituationen, zum Beispiel bei einem Überholvorgang auf der Landstraße, kann der Fahrer gezwungen sein, den Geschwindigkeitsgrenzwert kurzeitig zu überschreiten. In diesem Fall kann die Rückstellvorrichtung entgegen der von ihr ausgeübten Rückstellkraft übertreten werden.

Um eine möglichst reibungs- und geräuscharme Bewegung des Betätigungsstößels zu gewährleisten, sind an der Rückstellvorrichtung an verschiedenen Stellen Lagervorrichtungen vorgesehen. Vorteilhafterweise ist mindestens eine Lagervorrichtung am nicht beweglichen Teil der Rückstellvorrichtung vorgesehen. Ist zum Beispiel die Spulenanordnung fest stehend, so kann der axial verlaufende Teil des Spulenträgers als Hohlzylinder ausgeführt sein, in dem der Betätigungsstößel sich bewegt, und an dessen mindestens einem Ende eine Lagervorrichtung vorgesehen ist. Entsprechendes gilt für den Fall, dass die Magnetordnung den nicht beweglichen Teil der Rückstellvorrichtung bildet. Dann ist das Magnetjoch entsprechend ausgeführt.

Es wäre auch denkbar, dass die Lagervorrichtung auf dem Betätigungsstößel selbst vorgesehen ist. So kann auf beiden Seiten des Betätigungsstößels an den entsprechenden Stellen zum Beispiel eine Teflonbeschichtung angebracht sein.

Vorzugsweise umgibt die Rückstellvorrichtung ein Gehäuse, das wiederum mit dem Pedalhalter verbunden ist. Das Gehäuse dient als Aufnahme der Rückstellvorrichtung. Zudem bietet es Schutz vor schädlichen Umwelteinflüssen wie Feuchtigkeit oder Schmutz und dient unter anderem auch zur Abfuhr der in der Spule entstehenden Wärme . Das Gehäuse kann insbesondere auch einen Teil der Lagervorrichtung des beweglichen Stellgliedes aufnehmen. Es kann auch die gesamte Lagervorrichtung am Gehäuse vorgesehen sein.

Vorteilhafterweise liegt der Betätigungsstößel immer am Pedalelement an. Dadurch wird die Reaktionszeit der Rückstellvorrichtung minimiert, die Vorrichtung ist sozusagen immer vorgespannt. Andernfalls müssten ständig die Positionen des Pedalelements und des Betätigungsstößels abgefragt werden, um in dem Fall, dass die Rückstellkraft wirken soll, ein ruckfreies Aufeinandertreffen der beiden Komponenten zu gewährleisten.

Um ein permanentes Anliegen des Betätigungsstößels am Pedalelement zu bewerkstelligen, ist insbesondere eine mechanische Feder zwischen dem Gehäuse und dem beweglichen Stellglied angeordnet, so dass das Stellglied ständig einen leichten Druck auf das Pedalelement ausübt.

Das selbe Ergebnis wird alternativ dadurch erreicht, dass durch die Spule permanent ein Strom fließt, der gerade so groß ist, dass der Betätigungsstößel immer am Pedalelement anliegt.

In beiden Fällen, in denen der Betätigungsstößel permanent mit einer gewissen Kraft am Pedalhalter anliegt, ist diese Kraft so bemessen, dass der Fahrer keine Rückstellkraft durch das Pedalelement erfährt.

Es ist aber auch denkbar, dass in der Phase, in der die Rückstellkraft nicht wirkt, die Spule so bestromt wird, dass das bewegliche Stellglied in die Position gebracht wird, die den größten Abstand zum Pedalelement aufweist. Das Stellglied befindet sich dann in einer definierten Endlage und hat keinen Kontakt zum Pedalelement.

Die erfindungsgemäße Vorrichtung zur Steuerung der Fahrzeuggeschwindigkeit erlaubt eine einfache, wenige Baumteile umfassende und kompakte Bauweise, so dass sowohl Material- und Herstellungskoten als auch der benötigte Bauraum gering gehalten werden können. Die einfache Ansteuerung der Spule, das Wegfallen einer Kraftumlenkvorrichtung und eines Getriebes, die günstige Kraft-Weg-Charakteristik und die Möglichkeit der Realisierung kleinster Auslenkungen des Betätigungsstößels sind weitere Vorteile dieser Vorrichtung.

Zudem kann der Tauchspulensteller zusätzlich zur Erzeugung der Rückstellkraft die Pedalkennlinie eines herkömmlichen Gaspedals simulieren. Dadurch kann sowohl die Hysteresevorrichtung als auch die Rückholvorrichtung eines herkömmlichen Gaspedals wegfallen.

Nachfolgend wird die Erfindung an Hand eines bevorzugten Ausführungsbeispiels in Verbindung mit den Zeichnungen näher beschrieben. Dabei zeigen
- Fig. 1: einen Querschnitt der Vorrichtung mit Pedalelement und Pedalhalter und
- Fig. 2: eine Draufsicht auf die montierte Vorrichtung nach Fig.1.

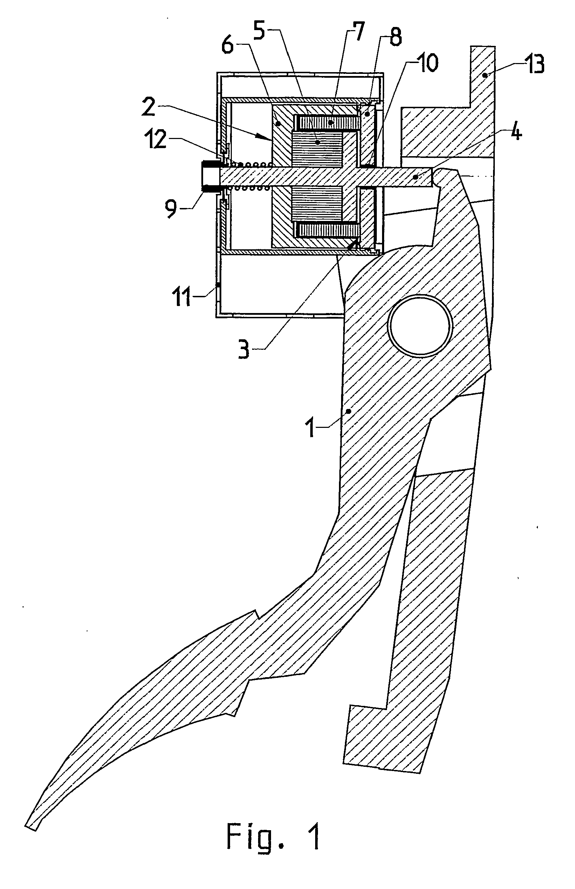

Eine in Fig. 1 dargestellte Vorrichtung zur Steuerung der Fahrzeuggeschwindigkeit umfasst ein Pedalelement 1 und eine elektrodynamische Rückstellvorrichtung. Das Pedalelement 1 ist drehbar am Pedalhalter 13 angeordnet. Der Pedalhalter 13 wiederum ist in nicht gezeigter Weise mit der Fahrzeugkarosserie verbunden.

Die elektrodynamische Rückstellvorrichtung ist erfindungsgemäß als Tauchspulensteller ausgeführt. Dabei ist der Tauchspulensteller vorzugsweise zylinderförmig mit kreisförmigem Querschnitt ausgebildet. Der Tauchspulensteller umfasst eine Magnetanordnung 2 und eine Spulenanordnung 3. Die Magnetanordnung 2 umfasst im wesentlichen einen ringförmigen Magneten 5, hier einen Permanentmagneten, und ein im wesentlichen topfförmiges Magnetjoch 6, das den Magneten 5 umgibt. Die Spulenanordnung 3 umfasst eine Spule 7 und einen im wesentlichen topfförmigen Spulenträger 8.

Die Magnetanordnung 2 ist als bewegliches Stellglied vorgesehen. In der Achse des topfförmigen Magnetjochs 6 ist ein im wesentlichen stabförmiger Betätigungsstößel 4 derart integriert, dass er über die Ober- und die Unterseite des topfförmigen Magnetjochs 6 hinausragt. Der Betätigungsstößel 4 bewirkt die Rückstellkraft auf das Pedalelement 1.

Der Spulenträger 8 ist mit dem Gehäuse 11 verbunden und bildet den fest stehenden Teil der Rückstellvorrichtung. Die Spule 7 ist auf die äußere Mantelfläche des Spulenträgers 8 gewickelt. Der Spulenträger 8 weist in seiner Achse eine insbesondere kreisförmige Öffnung auf, durch die hindurch der pedalseitige Teil des Betätigungsstößels 4 auf das Pedalelement 1 wirkt

Das topfförmige Magnetjoch 6 und der topfförmige Spulenträger 8 sind konzentrisch so angeordnet, dass die innere Mantelfläche des Magnetjochs 6 die äußere Mantelfläche des Spulenträgers 8 mit der Spule 7 zumindest teilweise umschließt und die innere Mantelfläche des Spulenträgers 8 wiederum die äußere Mantelfläche des ringförmigen Magneten 5 zumindest teilweise umschließt.

Wird die Spule 7 bestromt, so bewegt sich je nach Stromrichtung die Magnetanordnung 2 mit dem Betätigungsstößel 4 in der Achse der Rückstellvorrichtung vom Pedalelement 1 weg oder zum Pedalelement 1 hin. Dabei bewegt sich der zum Pedalelement 1 gewandte Teil des Betätigungsstößels 4 während des gesamten Stellweges in der insbesondere kreisförmigen Öffnung des Spulenträgers 8.

Die Bewegung der Magnetanordnung 2 verläuft vorzugsweise geradlinig. Sie könnte aber auch auf einer leicht gekrümmten Bahn, zum Beispiel auf einem Kreissegment erfolgen.

Alternativ zu dem in der Fig. 1 gezeigten Ausführungsbeispiel ist es auch denkbar, den Betätigungsstößel 4 am Spulenträger 8 zu integrieren und die Spulenanordnung 3 als bewegliches Stellglied auszuführen.

Das Pedalelement zur Veränderung der Fahrzeuggeschwindigkeit wird vom Fahrerfuß in eine Richtung zur Geschwindigkeitserhöhung betätigt. Die Betätigung des Pedalelements in die Gegenrichtung geschieht in der Regel über eine nicht gezeigte mechanische Rückholfeder am Pedalelement 1 und bewirkt eine Geschwindigkeitsverringerung.

Zwischen dem Betätigungsstößel 4 und dem Pedalelement 1 gibt es keinerlei mechanische oder anders geartete feste Verbindung. Dadurch ist sichergestellt, dass der Betätigungsstößel 4 auf das Pedalelement 1 nur in eine Richtung eine Rückstellkraft ausüben kann, und zwar in Richtung einer Geschwindigkeitsverringerung.

Die Rückstellvorrichtung verursacht dann eine Gegenkraft am Pedalelement 1 wenn, zum Beispiel bei einer Geschwindigkeitsbegrenzungsfunktion der Geschwindigkeitsgrenzwert erreicht oder gar überschritten wird. Diese Situation wird dem Fahrer über das Pedalelement 1 mitgeteilt. Die Folge der Gegenkraft ist eine Unterbrechung der Geschwindigkeitserhöhung beziehungsweise beim Überschreiten des Geschwindigkeitsgrenzwerts eine Geschwindigkeitsverringerung.

Der Fahrer kann jedoch die Funktion der Rückstellvorrichtung außer Kraft setzen. In gewissen Fahrsituationen, zum Beispiel bei einem Überholvorgang auf der Landstraße, ist der Fahrer gezwungen, den gewählten Geschwindigkeitsgrenzwert kurzzeitig zu überschreiten. In diesem Fall kann die Rückstellvorrichtung entgegen der von ihr ausgeübten Rückstellkraft übertreten werden. Dieser Fahrerwunsch wird beispielsweise durch die Stellung des Pedalelements 1 erkannt und daraufhin wird der Strom durch die Spule verringert bzw. abgeschaltet.

Um den Verschleiß und die Geräuschentwicklung der Rückstellvorrichtung minimal zu halten, ist eine Lagervorrichtung 9, 10 für das bewegliche Stellglied auf beiden Seiten des Betätigungsstößels 4 vorgesehen. Nach einer bevorzugten Ausführungsform ist auf der dem Pedalelement 1 zugewandten Seite die Lagervorrichtung 10 in der vorzugsweise kreisrunden Öffnung axial im Boden des topfförmigen Spulenträgers 8 angebracht.

Die Lagervorrichtung 9 für den Betätigungsstößel 4 auf der dem Pedalelement 1 abgewandten Seite ist vorzugsweise am Gehäuse 11 der Rück-stellvorrichtung vorgesehen. Dieses Lager kann zusätzlich eine Abdichtfunktion erfüllen. Als Lagervorrichtung 9, 10 kann beispielsweise ein Gleitlager oder eine Teflonbuchse verwendet werden.

Denkbar wäre auch, dass die Lagervorrichtung 9 ebenfalls im Spulenträger 8 integriert ist. Beispielweise kann der axial verlaufende Teil des Spulenträgers 8 als Hohlzylinder ausgebildet sein. Die Lagervorrichtung 9 wäre dann zum Beispiel an dem vom Pedalelement 1 abgewandten Ende des Hohlzylinders vorgesehen.

Insbesondere kann die Lagervorrichtung 10 auf der dem Pedalelement 1 zugewandten Seite statt im Spulenträger 8 am Gehäuse 11 integriert sein und zusätzlich an dieser Stelle des Gehäuses 11 eine Dichtfunktion übernehmen.

Um die Reaktionszeit der Rückstellvorrichtung und damit das Ansprechverhalten der Vorrichtung zu optimieren, liegt vorteilhafterweise der Betätigungsstößel 4 am Pedaelement 1 an. Dadurch ist die Vorrichtung immer in einem vorgespannten Zustand. Zu diesem Zweck ist insbesondere eine mechanische Feder 12 zwischen dem Gehäuse 11 und dem als bewegliches Stellglied wirkenden Magnetjoch 6 so angeordnet, dass der Stellweg des Betätigungsstößels 4 auf der dem Pedalelement 1 abgewandten Seite innerhalb der Feder 12 verläuft.

Ein Anliegen des Betätigungsstößels 4 am Pedalelement 1 kann auch dadurch erreicht werden, dass durch die Spule 7 stets ein Strom fließt.

In beiden Fällen, in denen der Betätigungsstößel 4 mit einer gewissen Kraft am Pedalelement 1 anliegt, ist diese Kraft so bemessen, dass der Fahrer keine Rückstellkraft durch das Pedalelement 1 verspürt.

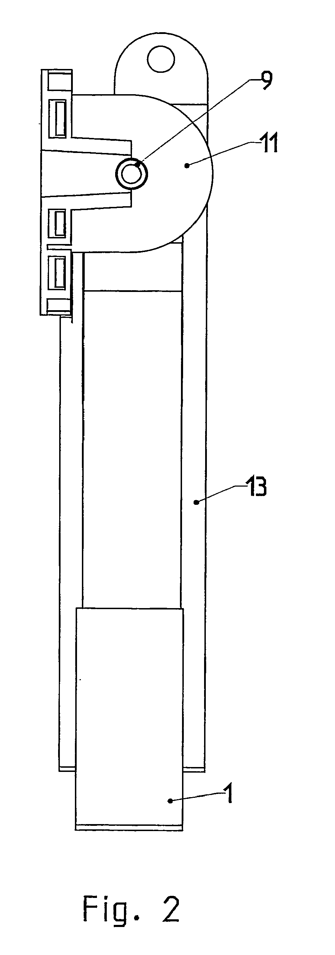

Fig. 2 zeigt eine Draufsicht auf das Gehäuse 11 der Rückstellvorrichtung mit dem Pedalelement 1 und dem Pedalhalter 13.

Die erfindungsgemäße Vorrichtung zur Steuerung der Fahrzeuggeschwindigkeit erlaubt eine einfache und kompakte Bauweise, so dass sowohl Material- und Herstellungskosten als auch der benötigte Bauraum gering gehalten werden können. Die einfache Ansteuerung der Spule 7, das Wegfallen einer Kraftumlenkvorrichtung und eines Getriebes, die günstige Kraft-Weg-Charakteristik und die Möglichkeit der präzisen Realisierung kleinster Auslenkungen des Betätigungsstößels 4 sind weitere Vorteile dieser Vorrichtung.

### Bezugszeichenliste:

- 1: Pedalelement
- 2: Magnetanordnung
- 3: Spulenanordnung
- 4: Betätigungsstößel
- 5: Magnet
- 6: Magnetjoch
- 7: Spule
- 8: Spulenträger
- 9: Lagervorrichtung, pedalelementdiametral
- 10: Lagervorrichtung, pedalelementseitig
- 11: Gehäuse
- 12: Mechanische Feder
- 13: Pedalhalter

## Patentansprüche

1. Vorrichtung zur Steuerung der Geschwindigkeit eines Fahrzeugs, mit einem Pedalelement (1) zur Veränderung der Geschwindigkeit des Fahrzeugs und einer elektrodynamischen Rückstellvorrichtung, die ein bewegliches Stellglied (2, 3) mit einem Betätigungsstößel (4) umfasst, der auf das Pedalelement (1) einwirkt, wobei als elektrodynamische Rückstellvorrichtung ein Tauchspulensteller mit einer Magnetanordnung (2) und einer Spulenanordnung (3) vorgesehen ist, **dadurch gekennzeichnet, dass** der Betätigungsstößel (4) des Tauchspulenstellers am Pedalelement (1) zu jeder Zeit anliegt, indem ein Strom durch eine Spule (7) der Spulenanordnung (3) wenigstens so groß ist, dass der Betätigungsstößel (4) am Pedalelement (1) anliegt.

2. Vorrichtung nach Anspruch 1, **dadurch gekennzeichnet, dass** die Magnetanordnung (2) oder die Spulenanordnung (3) als Stellglied (2, 3) vorgesehen ist.

3. Vorrichtung nach Anspruch 2, **dadurch gekennzeichnet, dass** der Betätigungsstößel (4) an einem Magnetjoch (6) der Magnetanordnung (2) oder an einem Spulenträger (8) der Spulenanordnung (3) vorgesehen ist.

4. Vorrichtung nach einem der Ansprüche 1 bis 3, **dadurch gekennzeichnet, dass** die Rückstellvorrichtung für eine geradlinige Bewegung des Stellgliedes (2, 3) ausgebildet ist.

5. Vorrichtung nach einem der Ansprüche 1 bis 4, **dadurch gekennzeichnet, dass** die Wechselwirkung zwischen Betätigungsstößel (4) und Pedalelement (1) dergestalt ist, dass der Betätigungsstößel (4) auf das Pedalelement (1) nur in eine Richtung eine Rückstellkraft ausübt und in entgegengesetzter Richtung das Pedalelement (1) die Rückstellkraft überwinden kann.

6. Vorrichtung nach einem der Ansprüche 1 bis 5, **dadurch gekennzeichnet, dass** eine Lagervorrichtung (9, 10) des beweglichen Stellgliedes (2, 3) wenigstens zum Teil am nicht beweglichen Teil der Rückstellvorrichtung vorgesehen ist.

7. Vorrichtung nach einem der Ansprüche 1 bis 6, **dadurch gekennzeichnet, dass** die Lagervorrichtung (9, 10) des beweglichen Stellgliedes (2, 3) wenigstens zum Teil an einem die Rückstellvorrichtung aufnehmenden Gehäuse (11) vorgesehen ist.

8. Vorrichtung nach einem der Ansprüche 1 bis 7, **dadurch gekennzeichnet, dass** eine mechanische Feder (12) so zwischen dem Gehäuse (11) und dem beweglichen Stellglied (2, 3) angeordnet ist, dass der Betätigungsstößel (4) am Pedalelement (1) anliegt.

## Claims

1. A device for controlling the speed of a vehicle including a pedal element (1) for changing the speed of the vehicle and an electrodynamic reset device comprising a movable actuator (2, 3) having an actuating tappet (4) acting upon the pedal element (1), wherein a moving coil actuator having a magnet arrangement (2) and a coil arrangement (3) is provided as the electrodynamic reset device, **characterized in that** the actuating tappet (4) of the moving coil actuator bears against the pedal element (1) at any time due to the fact that a current flowing through a coil (7) of the coil arrangement (3) is at least high enough that the actuating tappet (4) bears against the pedal element (1).

2. A device according to claim 1, **characterized in that** the magnet arrangement (2) or the coil arrangement (3) is provided as the actuator (2, 3).

3. A device according to claim 2, **characterized in that** the actuating tappet (4) is provided on a magnetic yoke (6) of the magnet arrangement (2) or on a coil holder (8) of the coil arrangement (3).

4. A device according to any one of claims 1 to 3, **characterized in that** the reset device is designed for a linear motion of the actuator (2, 3).

5. A device according to any one of claims 1 to 4**, characterized in that** the interaction between the actuating tappet (4) and the pedal element (1) is such that the actuating tappet (4) exerts a resetting force on the pedal element (1) in one direction only and that the pedal element (1) is able to overcome the resetting force in the opposite direction.

6. A device according to any one of claims 1 to 5, **characterized in that** a bearing device (9, 10) of the movable actuator (2, 3) is provided at least in part on the non-movable part of the reset device.

7. A device according to any one of claims 1 to 6, **characterized in that** the bearing device (9, 10) of the movable actuator (2, 3) is provided at least in part on a housing (11) accommodating the reset device.

8. A device according to any one of claims 1 to 7, **characterized in that** a mechanical spring (12) is arranged between the housing (11) and the movable actuator (2, 3) such that the actuating tappet (4) bears against the pedal element (1).

## Revendications

1. Dispositif de commande de la vitesse d'un véhicule, avec un élément à pédale (1) destiné à modifier la vitesse du véhicule et un dispositif de rappel électrodynamique qui comprend un organe de réglage (2, 3) mobile avec un poussoir d'actionnement (4) qui agit sur l'élément à pédale (1), un actionneur à bobine mobile avec un arrangement d'aimant (2) et un arrangement de bobine (3) étant prévu en tant que dispositif de rappel électrodynamique, **caractérisé en ce que** le poussoir d'actionnement (4) de l'actionneur à bobine mobile est à tout moment placé contre l'élément à pédale (1) par le fait qu'un courant traversant une bobine (7) de l'arrangement de bobine (3) est au moins assez élevé pour que le poussoir d'actionnement (4) soit placé contre l'élément à pédale (1).

2. Dispositif selon la revendication 1, **caractérisé en ce que** l'arrangement d'aimant (2) ou l'arrangement de bobine (3) est prévu en tant qu'organe de réglage (2, 3).

3. Dispositif selon la revendication 2, **caractérisé en ce que** le poussoir d'actionnement (4) est prévu sur une culasse magnétique (6) de l'arrangement d'aimant (2) ou sur un support de bobine (8) de l'arrangement de bobine (3).

4. Dispositif selon une des revendications 1 à 3, **caractérisé en ce que** le dispositif de rappel est constitué pour un déplacement rectiligne de l'organe de réglage (2, 3).

5. Dispositif selon une des revendications 1 à 4, **caractérisé en ce que** l'interaction entre le poussoir d'actionnement (4) et l'élément à pédale (1) est telle que le poussoir d'actionnement (4) n'exerce une force de rappel sur l'élément à pédale (1) que dans un sens et que, dans le sens opposé, l'élément à pédale (1) peut surmonter la force de rappel.

6. Dispositif selon une des revendications 1 à 5, **caractérisé en ce qu'**un dispositif de support (9, 10) de l'organe de réglage (2, 3) mobile est prévu au moins partiellement sur la partie non mobile du dispositif de rappel.

7. Dispositif selon une des revendications 1 à 6, **caractérisé en ce que** le dispositif de support (9, 10) de l'organe de réglage (2, 3) mobile est prévu au moins en partie sur un boîtier (11) logeant le dispositif de rappel.

8. Dispositif selon une des revendications 1 à 7, **caractérisé en ce qu'**un ressort mécanique (12) est disposé entre le boîtier (11) et l'organe de réglage (2, 3) mobile de sorte que le poussoir d'actionnement (4) est placé contre l'élément à pédale (1).
